# EUROPÄISCHE PATENTSCHRIFT

(11) **EP 1 318 041 B1**
(45) Veröffentlichungstag und Bekanntmachung des Hinweises auf die Patenterteilung: **08.09.2004**
(21) Anmeldenummer: 02025330.8
(22) Anmeldetag: 13.11.2002
(51) Int. Cl.: B60J 7/20, E05B 65/19, E05F 15/00

(54) **Vorrichtung zum Entriegeln/Verriegeln und Öffnen/Schliessen einer Fahrzeugklappe**
Device for locking/unlocking and for opening/closing a vehicle lid
Dispositif pour verrouiller/déverrouiller et pour ouvrir/fermer une trappe de véhicule

(30) Priorität: 05.12.2001 DE 10159537
(43) Veröffentlichungstag der Anmeldung: 11.06.2003
(73) Patentinhaber: Webasto Vehicle Systems International GmbH, 82131 Stockdorf (DE)
(72) Erfinder: Langguth, Martin, 82152 Krailling (DE)
(74) Vertreter: Schumacher & Willsau

(56) Entgegenhaltungen:
- WO-A-98/55723
- DE-A- 3 206 690
- DE-A- 10 023 382
- DE-A- 19 650 402
- DE-C- 19 525 587

## Beschreibung

Die Erfindung betrifft eine Vorrichtung zum Entriegeln/Verriegeln und Öff nen/Schließen einer Fahrzeugklappe, insbesondere einer Verdeckkastenabdeckung.

Eine gattungsgemäße Vorrichtung ist beispielsweise aus der DE 196 50 402 A1 bekannt, die einen Verdeckkastendeckel für ein Kraftfahrzeug betrifft, der einem heckseitigen Aufnahmeraum zur Unterbringung eines abgelegten Verdecks zugeordnet und mittels einer Antriebseinrichtung von einer Schließstellung in eine hochgeschwenkte Offenstellung bewegbar ist, wobei der Verdeckkastendeckel in der Schließstellung über zumindest eine lösbare Verriegelungsvorrichtung am feststehenden Aufbau festlegbar ist. Um den baulichen Aufwand für die Verstellbewegung und für das Ent- beziehungsweise Verriegeln des Verdeckkastendeckels zu verringern und den Zeitbedarf für beide Bewegungsabläufe zu reduzieren, ist dabei vorgesehen, dass die Antriebseinrichtung zur Verstellbewegung des Verdeckkastendeckels über eine mechanische Einrichtung mit der zumindest einen Verriegelungsvorrichtung in Wirkverbindung steht und somit auch zum Verriegeln beziehungsweise Entriegeln des Verdeckkastendeckels dient. Dabei umfasst eine Riegelsteinmechanik für zwei seitliche Verriegelungsvorrichtungen einen unterhalb eines Mitnehmers angeordneten Schlitten, der in einer eine geringe Längserstreckung aufweisenden Längsführung des Gehäuses gleitend gelagert ist, sowie einen in Höhenrichtung verschiebbaren Riegelstein, der in eine aufrechte Durchgangsöffnung des Schlittens eingesetzt ist.

Aus der DE 195 32 567 C1 ist weiterhin ein Verdeck für ein Fahrzeug bekannt, das mittels einer Antriebseinrichtung selbsttätig von einer einen Fahrgastraum überspannenden Schließstellung in eine heckseitige Ablagestellung verlagerbar ist, in der es in einem mit einem Verdeckkastendeckel versehenen Verdeckkasten aufgenommen ist, wobei die Antriebseinrichtung zumindest ein mit dem Verdeckgestell des Verdecks zusammenwirkendes Antriebselement umfasst. Zur Vereinfachung des Aufbaus der Antriebseinrichtung und zur Verkürzung des Öffnungs- und Schließvorganges des Verdecks ist dabei vorgesehen, dass das am Verdeckgestell angreifende Antriebselement einen ersten Kurbeltrieb umfasst, der mit einer von einem Elektromotor angetriebenen, aufbauseitig feststehenden Getriebeeinheit in Wirkverbindung steht, und dass das das Verdeckgestell antreibende Antriebselement über eine mechanische Zwangssteuerung mit dem Ver deckkastendeckel gekoppelt ist. Dabei wird die mechanische Zwangssteuerung durch einen zweiten Kurbeltrieb gebildet, der an einem ersten Kurbeltrieb und dem Verdeckkastendeckel angeschlossen ist.

Den bekannten gattungsgemäßen Vorrichtungen ist gemeinsam, dass die eingesetzte Technik aufwendig ist und daher hohe Kosten verursacht. Weiterhin ist in vielen Fällen eine Übertragung großer Kräfte nicht möglich und es tritt eine hohe Reibung im System auf. Ein weiteres Problem besteht in vielen Fällen darin, dass eine Zwangskopplung häufig nicht in jeder Arbeitsstellung gewährleistet ist, in der sie erforderlich wäre.

Der Erfindung liegt die Aufgabe zugrunde, die gattungsgemäßen Vorrichtungen derart weiterzubilden, dass die vorstehend erläuterten Probleme beseitigt oder zumindest verringert werden.

Diese Aufgabe wird durch eine Vorrichtung mit den Merkmalen des Anspruchs 1 gelöst.

Vorteilhafte Ausgestaltungen und Weiterbildungen der Erfindung ergeben sich aus den abhängigen Ansprüchen.

Die Erfindung baut auf dem gattungsgemäßen Stand der Technik dadurch auf, dass sie einen hin und her beweglichen ersten Gleiter, der zum Entriegeln/Nerriegeln der Fahrzeugklappe einen Verriegelungsmechanismus betätigt, und einen in dem ersten Gleiter hin und her beweglichen zweiten Gleiter aufweist, der zum Öffnen/Schließen der Fahrzeugklappe direkt oder indirekt an der Fahrzeugklappe angelenkt ist. Dabei ist zumindest die Hauptbewegungsrichtung des ersten Gleiters und des zweiten Gleiters vorzugsweise im Wesentlichen parallel. Die erfindungsgemäße Lösung ist vergleichsweise einfach und ermöglicht die Übertragung hoher Kräfte bei niedrigen Reibungswerten. Weiterhin ist die für die jeweiligen Arbeitsstellungen erforderliche Zwangskopplung gewährleistet.

Bei bevorzugten Ausführungsformen der erfindungsgemäßen Vorrichtung ist vor gesehen, dass der erste Gleiter mit einem Antrieb in Verbindung steht. Dabei steht der erste Gleiter vorzugsweise direkt mit dem Antrieb in Verbindung.

In diesem Zusammenhang ist vorzugsweise weiterhin vorgesehen, dass der Antrieb ein elektrischer und/oder hydraulischer Antrieb ist. Die jeweiligen Antriebskräfte können dabei beispielsweise durch Antriebskabel, Zahnräder und/oder Zahnstangen, Riemen, Lenker und dergleichen übertragen werden. Bei besonders bevorzugten Ausführungsformen ist vorgesehen, dass nur ein einziger Antrieb zum Entriegeln/Verriegeln und Öffnen/Schließen der Fahrzeugklappe eingesetzt wird.

Die Erfindung kann in vorteilhafter Weise dadurch weitergebildet sein, dass der Verriegelungsmechanismus einen Verriegelungshaken und einen mit diesem zusammenwirkenden Verriegelungsstift umfasst. Gegebenenfalls können auch mehrere Verriegelungshaken vorgesehen sein, die vorzugsweise mit einer entsprechenden Anzahl von Verriegelungsstiften zusammenwirken. Insbesondere im Zusammenhang mit Verdeckkastenabdeckungen ist es üblich, auf beiden Fahrzeugseiten ähnliche Vorrichtungen zum Entriegeln/Verriegeln und Öffnen/Schließen der Verdeckkastenabdeckung vorzusehen. In diesem Fall sind die erfindungsgemäß vorgesehenen Einrichtungen vorzugsweise auf beiden Fahrzeugseiten zumindest in ähnlicher Weise vorgesehen.

Im Zusammenhang mit der Verriegelungseinrichtung kann weiterhin vorgesehen sein, dass der Verriegelungsstift an der Fahrzeugklappe angeordnet ist, und dass der Verriegelungshaken direkt oder indirekt mit dem ersten Gleiter in Verbindung steht. Eine direkte Verbindung zwischen dem Verriegelungshaken und dem ersten Gleiter kann beispielsweise über einen Schieber erfolgen, während eine indirekte Verbindung zwischen dem Verriegelungshaken und dem ersten Gleiter beispielsweise über ein Antriebskabel hergestellt werden kann.

Bei besonders bevorzugten Ausführungsformen der erfindungsgemäßen Vorrichtung ist vorgesehen, dass der erste Gleiter in einer ersten Führungsbahn hin und her beweglich ist, die eine erste Ausnehmung aufweist, in die sich der zweite Gleiter zumindest abschnittsweise hineinerstrecken kann. Die erste Ausnehmung kann insbesondere dazu vorgesehen sein, die Stellung des zweiten Gleiters bezogen auf den Fahrzeugaufbau im Wesentlichen konstant zu halten, wenn der erste Gleiter vorherbestimmte Strecken zurücklegt.

Im vorstehend erläuterten Zusammenhang ist vorzugsweise weiterhin vorgesehen, dass der zweite Gleiter in einer zweiten Führungsbahn hin und her beweglich ist, die eine zweite Ausnehmung aufweist, in die sich der zweite Gleiter zumindest abschnittsweise hineinerstrecken kann. Die zweite Ausnehmung kann dabei beispielsweise dazu dienen, während vorherbestimmter Bewegungsabläufe eine Zwangskoppelung zwischen dem zweiten Gleiter und dem ersten Gleiter herzustellen, beispielsweise damit der Öffnungsvorgang einer Verdeckkastenabdeckung nicht manuell beschleunigt werden kann, indem der Antrieb überholt wird.

Bevorzugte Weiterbildungen der Erfindung sehen vor, dass der erste Gleiter in eine erste Arbeitsstellung, in der der Verriegelungsmechanismus die geschlossene Fahrzeugklappe verriegelt, und in eine zweite Arbeitsstellung bringbar ist, in der die Fahrzeugklappe geöffnet ist. Der Übergang der Fahrzeugklappe von der geschlossenen Stellung in die geöffnete Stellung erfolgt vorzugsweise über eine Schwenkbewegung.

Vorzugsweise nimmt der erste Gleiter auf seinem Weg von der ersten Arbeitsstellung in die zweite Arbeitsstellung den zweiten Gleiter zumindest streckenweise mit. Dabei kann insbesondere vorgesehen sein, dass sich zur Entriegelung der Fahrzeugklappe zunächst nur der erste Gleiter bewegt und dass der erste Gleiter den zweiten Gleiter nach der Entriegelung mitnimmt, damit die Fahrzeugklappe durch die Bewegung des zweiten Gleiters geöffnet wird.

In diesem Zusammenhang wird es vorteilhaft, wenn der erste Gleiter auf seinem Weg von der ersten Arbeitsstellung in die zweite Arbeitsstellung eine erste Strekke zurücklegt, während sich der zweite Gleiter zumindest abschnittsweise in die erste Ausnehmung erstreckt. Dabei kann die erste Strecke insbesondere der Strecke entsprechen, die der erste Gleiter zur Entriegelung der Fahrzeugklappe zurücklegen muss.

Zusätzlich oder alternativ kann vorgesehen sein, dass der erste Gleiter auf seinem Weg von der ersten Arbeitsstellung in die zweite Arbeitsstellung eine zweite Strecke zurücklegt, während sich der zweite Gleiter zumindest abschnittsweise in die zweite Ausnehmung erstreckt. Die zweite Strecke ist dabei vorzugsweise die Strecke, die der erste Gleiter und der zweite Gleiter zurücklegt, um die Fahrzeugklappe zu öffnen.

Insbesondere zu diesem Zweck sehen bevorzugte Ausführungsformen der erfindungsgemäßen Vorrichtung vor, dass der erste Gleiter den zweiten Gleiter mitnimmt, wenn sich der zweite Gleiter zumindest abschnittsweise in die zweite Ausnehmung erstreckt. Zum Mitnehmen des zweiten Gleiters kann dieser beispielsweise anschlagartig an einer die zweite Führungsbahn begrenzenden Fläche des ersten Gleiters anliegen.

Bei allen Ausführungsformen der erfindungsgemäßen Vorrichtung kann vorgesehen sein, dass der zweite Gleiter eine senkrecht zu seiner Bewegungsrichtung verlaufende erste Achse aufweist, um die ein erster Lenker schwenkbar ist, der direkt oder indirekt an der Fahrzeugklappe angelenkt ist. Sofern es sich bei der Fahrzeugklappe um eine Verdeckkastenabdeckung handelt, erstreckt sich die erste Achse vorzugsweise parallel zu den Fahrzeugachsen.

Bei bestimmten Ausführungsformen der erfindungsgemäßen Vorrichtung kann es vorteilhaft sein, dass die Fahrzeugklappe zumindest geringfügig angehoben wird, wenn der zweite Gleiter die erste Ausnehmung verlässt. Beispielsweise wenn die Fahrzeugklappe zum Öffnen um die erste Achse geschwenkt wird und sich ein Rand der Fahrzeugklappe über die erste Achse hinauserstreckt, ist ein derartiges geringfügiges Anheben erforderlich, um den Schwenkvorgang nicht zu beeinträchtigen.

Weiterhin kann vorgesehen sein, dass die erste Ausnehmung bezogen auf die Abmessungen des zweiten Gleiters ein Spiel aufweist, das nach einer zumindest teilweisen Entriegelung der Fahrzeugklappe zumindest einen Dichtungshub der Fahrzeugklappe ermöglicht. Das Spiel ist dabei vorzugsweise in der Bewegungsrichtung des zweiten Gleiters vorgesehen.

Für alle Ausführungsformen der erfindungsgemäßen Vorrichtung wird bevorzugt, dass das Öffnen/Schließen der Fahrzeugklappe im Wesentlichen durch eine Schwenkbewegung erfolgt.

Der Erfindung liegt die Erkenntnis zugrunde, dass durch eine im Wesentlichen parallele, jedoch zeitlich gesteuerte Bewegung von zwei Gleitern unterschiedliche Funktionen in einfacher Weise mechanisch gesteuert werden können. Die erfindungsgemäße Vorrichtung kann insbesondere eine vergleichsweise einfache Lösung darstellen, um mit nur einem Antrieb eine Fahrzeugklappe zu betätigen und zu verriegeln. Das Betätigen und Verriegeln kann dabei derart gekoppelt sein, dass eine Fehlschaltung ausgeschlossen wird. Ein Beispiel für eine derartige Fehlschaltung wäre eine Situation, in der sich der Haken in der Verriegelungsstellung befindet, die Fahrzeugklappe jedoch noch nicht so weit geschlossen ist, dass der Haken eingreifen konnte. Durch die Erfindung kann sichergestellt wer den, dass die Fahrzeugklappe sicher verriegelt ist, wenn der Antrieb seine Endstellung erreicht. Weiterhin ermöglichen es bevorzugte Ausführungsformen der erfindungsgemäßen Vorrichtung, dass auch hohe Dichtungskräfte mit einem relativ schwachen Antrieb aufgebracht werden können, insbesondere mit Hilfe des Verriegelungshakens. In diesem Zusammenhang kann weiterhin vorgesehen sein, dass in dem Bewegungsabschnitt, in dem der Verriegelungshaken den Dichtungshub aufbringt, das Betätigungsgestänge den nötigen Freigang hat.

Die Erfindung wird nun unter Bezugnahme auf die beigefügten Zeichnungen anhand bevorzugter Ausführungsformen beispielhaft erläutert. Es zeigt:
- Figur 1: eine Fahrzeugklappen-Betätigungseinrichtung, die mit einer ersten Ausführungsform der erfindungsgemäßen Vorrichtung ausgestattet ist, in einer ersten Arbeitsstellung, in der die Fahrzeugklappe geschlossen und verriegelt ist;
- Figur 2: die Fahrzeugklappen-Betätigungseinrichtung von Figur 1 in einer zweiten Arbeitsstellung;
- Figur 3: die Fahrzeugklappen-Betätigungseinrichtung von Figur 2 in einer dritten Arbeitsstellung;
- Figur 4: die Fahrzeugklappen-Betätigungseinrichtung von Figur 2 in einer vierten Arbeitsstellung;
- Figur 5: die Fahrzeugklappen-Betätigungseinrichtung von Figur 2 in einer fünften Arbeitsstellung, in der die Fahrzeugklappe geöffnet ist;
- Figur 6: eine Verdeckkastenabdeckung-Betätigungseinrichtung, die mit einer zweiten Ausführungsform der erfindungsgemäßen Vorrichtung ausgestattet ist, in einer ersten Arbeitsstellung, in der die Verdeckkastenabdeckung geschlossen und verriegelt ist;
- Figur 7: die Verdeckkastenabdeckung-Betätigungseinrichtung von Figur 6 in einer zweiten Arbeitsstellung;
- Figur 8: die Verdeckkastenabdeckung-Betätigungseinrichtung von Figur 7 in einer dritten Arbeitsstellung; und
- Figur 9: die Verdeckkastenabdeckung-Betätigungseinrichtung von Figur 7 in einer vierten Arbeitsstellung, in der die Verdeckkastenabdeckung geöffnet ist.

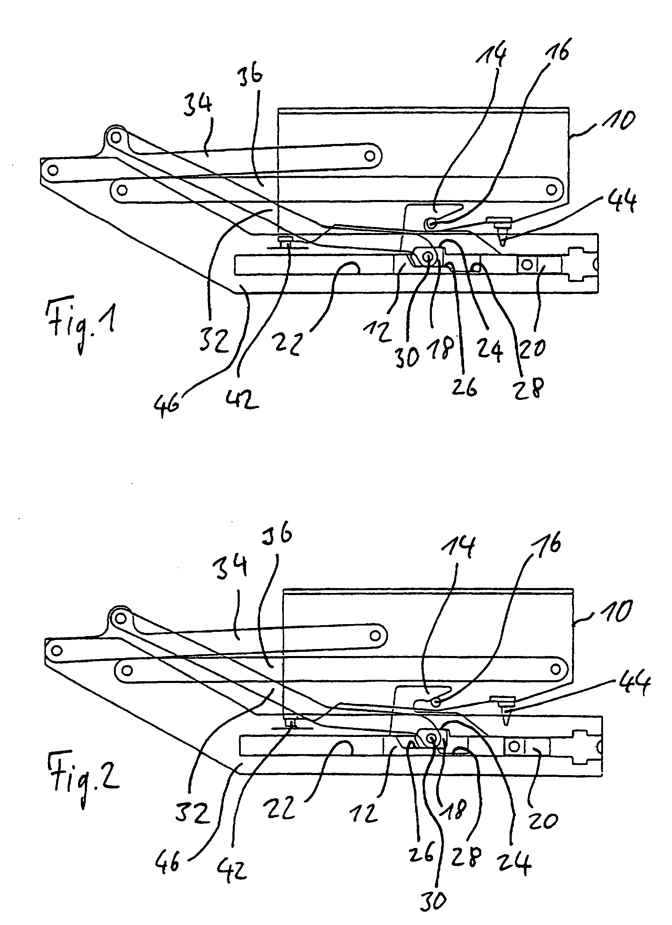

Die in den Figuren 1 bis 5 dargestellte Fahrzeugklappen-Betätigungseinrichtung ist zum Entriegeln/Verriegeln und Öffnen/Schließen einer Fahrzeugklappe 10 vorgesehen. Die erfindungsgemäße Vorrichtung umfasst eine in einem fahrzeugfesten Rahmen 46 vorgesehene erste Führungsbahn 22, in der ein erster Gleiter 12 hin und her beweglich ist. Die Hin- und Herbewegung des ersten Gleiters 12 wird durch einen Antrieb 20 hervorgerufen, bei dem es sich um einen elektrischen und/oder hydraulischen Antrieb handeln kann. Der erste Gleiter 12 steht mit einem Verriegelungshaken 14 in Verbindung, der dazu vorgesehen ist, mit einem Verriegelungsstift 16 zusammenzuwirken, der an der Fahrzeugklappe 10 angeordnet ist. Der erste Gleiter 12 weist eine zweite Führungsbahn 26 auf, die bezogen auf die Darstellung oben durch den fahrzeugfesten Rahmen 46 beziehungsweise die erste Führungsbahn 22 begrenzt wird. In der zweiten Führungsbahn 26 ist ein zweiter Gleiter 18 angeordnet, der bezogen auf den ersten Gleiter 12 bei bestimmten Bewegungen des ersten Gleiters 12 in der zweiten Führungsbahn 26 hin und her bewegt wird, wobei die Hin- und Herbewegung des zweiten Gleiters 18 im Wesentlichen parallel zur Hin- und Herbewegung des sten Gleiters 12 erfolgt. An dem zweiten Gleiter 18 ist ein erster Lenker 32 angelenkt, der um eine erste Achse 30 schwenkbar ist, die sich senkrecht zur ersten Führungsbahn 22 und zur zweiten Führungsbahn 26 erstreckt. Der erste Lenker 32 ist mit seinem vom zweiten Gleiter 18 abgewandten Ende schwenkbar an einem zweiten Lenker 34 angelenkt. Der zweite Lenker 34 ist sowohl am fahrzeugfesten Rahmen 46 als auch an der Fahrzeugklappe 10 schwenkbar angelenkt. Zur Führung der Schwenkbewegung der Fahrzeugklappe 10 ist ein dritter Lenker 36 vorgesehen, der im Wesentlichen parallel zum zweiten Lenker 34 angeordnet ist. Die erste Führungsbahn 22 weist eine erste Ausnehmung 24 auf, in die sich der zweite Gleiter 18 abschnittsweise hineinerstrecken kann. Die in dem ersten Gleiter 12 gebildete zweite Führungsbahn 26 weist eine zweite Ausnehmung 28 auf, in die sich der zweite Gleiter 18 ebenfalls abschnittsweise hineinerstrecken kann. Die Höhe des zweiten Gleiters 18, der zweiten Führungsbahn 26, der ersten Ausnehmung 24 und der zweiten Ausnehmung 28 ist dabei derart gewählt, dass die Summe der Höhe der zweiten Führungsbahn 26 außerhalb des Bereichs der zweiten Ausnehmung 28 und die Höhe der ersten Ausnehmung 24 der Höhe des zweiten Gleiters 18 entspricht. Weiterhin entspricht die Summe der Höhe der zweiten Führungsbahn 26 und die Höhe der zweiten Ausnehmung 28 der Höhe des zweiten Gleiters 18. Die Fahrzeugklappe 10 ist mit einem Anschlag 42 und mit einem Führungsbolzen 44 ausgestattet, um insbesondere die geschlossene Stellung der Fahrzeugklappe festzulegen. Weiterhin sind in der Regel nicht dargestellte Dichtungen vorgesehen, durch die die Fahrzeugklappe 10 im geschlossenen Zustand gegenüber dem Fahrzeugaufbau abgedichtet wird.

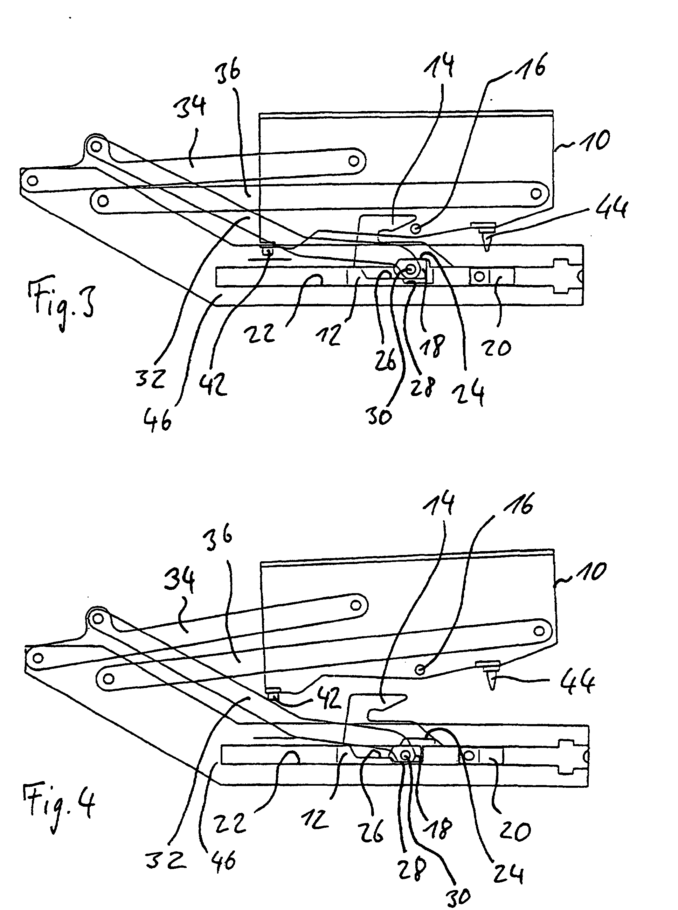

Figur 1 zeigt eine erste Arbeitsstellung der Fahrzeugklappen-Betätigungseinrichtung, in der die Fahrzeugklappe 10 geschlossen und verriegelt ist. Die Verriegelung erfolgt dabei durch das Zusammenwirken des Verriegelungshakens 14 mit dem Verriegelungsstift 16. Die in Figur 1 dargestellte erste Arbeitsstellung wird eingenommen, wenn sich der erste Gleiter 12, bezogen auf die Darstellung, in seiner rechten Endposition befindet, während sich der zweiter Gleiter 18 abschnittsweise in die erste Ausnehmung 24 erstreckt. Figur 2 zeigt eine zweite Arbeitsstellung der Fahrzeugklappen-Betätigungseinrichtung während des Entriegelungsvorganges. Um die Entriegelung vorzunehmen wird der erste Gleiter 12 und mit ihm der Verriegelungshaken 14 durch den Antrieb 20 nach links bewegt. Dabei erstreckt sich der zweite Gleiter 18 weiterhin abschnittsweise in die erste Ausnehmung 24, die in den Hauptbewegungsrichtungen des ersten Gleiters 12 und des zweiten Gleiters 18 ein Spiel aufweist. Dieses Spiel ermöglicht eine geringfügige Bewegung des zweiten Gleiters 18, die ihrerseits einen geringen Dichtungshub der Fahrzeugklappe 10 erlaubt.

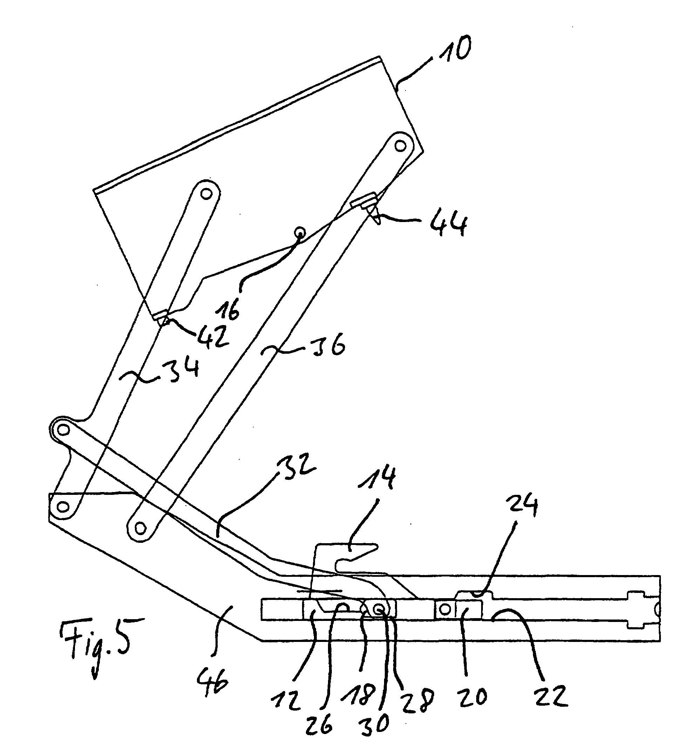

Figur 3 zeigt die Fahrzeugklappen-Betätigungseinrichtung in einer dritten Arbeitsstellung, in der der Entriegelungsvorgang fast abgeschlossen ist. Im Vergleich zur Darstellung von Figur 2 wurde der erste Gleiter 12, und mit ihm der Verriegelungshaken 14, weiter nach links bewegt, so dass der Verriegelungsstift 16 freigegeben wird. Der zweite Gleiter 18 erstreckt sich nach wie vor abschnittsweise in die erste Ausnehmung 24.

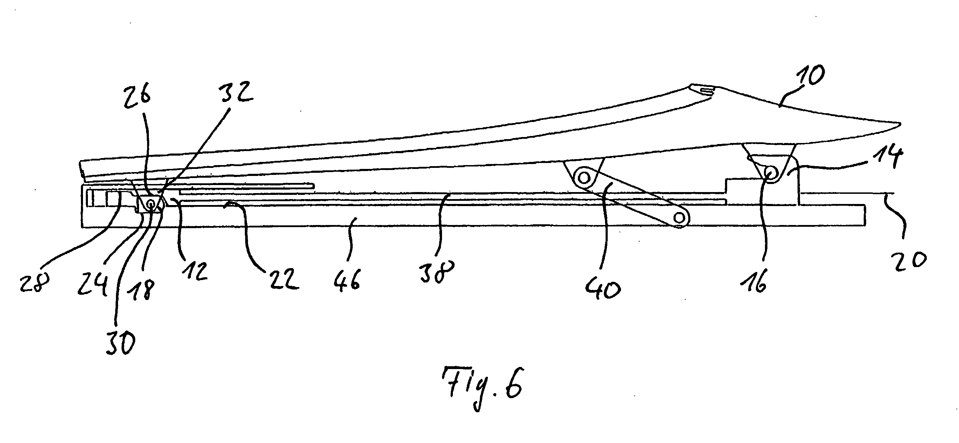

Figur 4 zeigt die Fahrzeugklappen-Betätigungseinrichtung in einer vierten Arbeitsstellung, in der das Öffnen der Fahrzeugklappe 10 begonnen hat. Zu diesem Zweck wurde der erste Gleiter 12 bezogen auf die Darstellung von Figur 3 weiter nach links bewegt. Der zweite Gleiter 18 erstreckt sich nun nicht mehr in die erste Ausnehmung 24 sondern in die zweite Ausnehmung 28, wobei die relativ geringe senkrecht zur Hauptbewegungsrichtung verlaufende Bewegung des zweiten Gleiters 18 durch dessen keilförmige Form erzwungen wird, wenn der zweite Gleiter 18 von dem ersten Gleiter 12 mitgenommen wird. Bei der Darstellung von Figur 4 hat der zweite Gleiter 18 begonnen, sich bezogen auf die Darstellung der Figuren 1 bis 3 nach links zu bewegen. Dadurch übt der erste Lenker 32 eine Kraft auf den zweiten Lenker 34 aus, die eine Schwenkbewegung der Fahrzeugklappe 10 hervorruft.

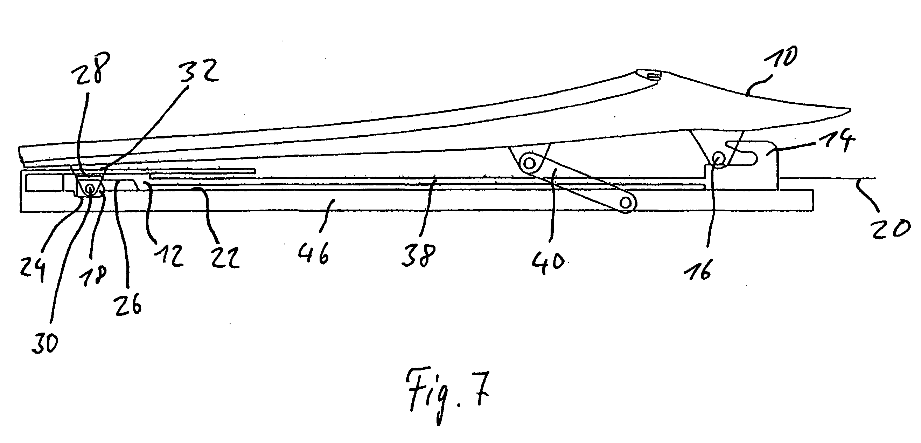

Figur 5 zeigt die Fahrzeugklappen-Betätigungseinrichtung in einer fünften beitsstellung, in der die Fahrzeugklappe 10 geöffnet ist. Um die in Figur 5 dargestellte Arbeitsstellung einzunehmen, wurden durch den Antrieb 20 sowohl der erste Gleiter 12 als auch der zweite Gleiter 18 bezogen auf die Darstellung von Figur 4 weiter nach links bewegt. Der zweite Gleiter 18 erstreckt sich dabei weiterhin in die zweite Ausnehmung 28.

Bei der in den Figuren 1 bis 5 dargestellten Fahrzeugklappen-Betätigungseinrichtung erfolgt das Schließen und Verriegeln der Fahrzeugklappe 10 in umgekehrter Reihenfolge wie das anhand der Figuren 1 bis 5 beschriebene Entriegeln und Öffnen.

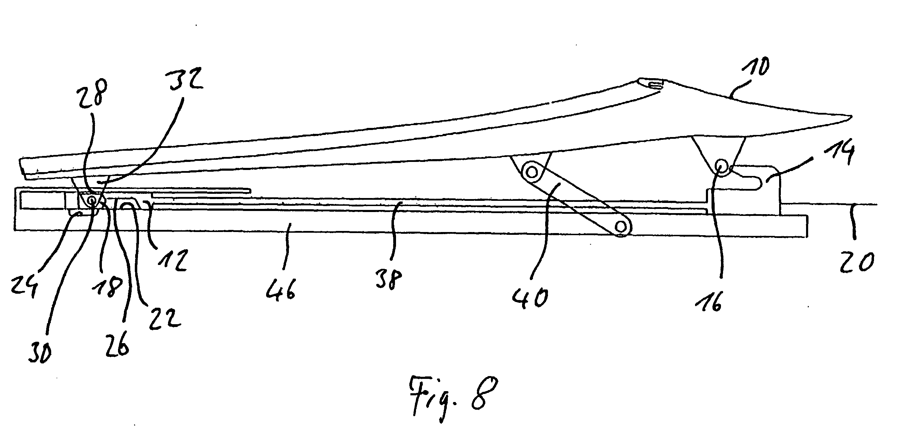

Die in den Figuren 6 bis 9 dargestellte Verdeckkastenabdeckung-Betätigungseinrichtung ist zum Entriegeln/Verriegeln und Öffnen/Schließen einer Verdeckkastenabdeckung 10 vorgesehen. Bei dieser Ausführungsform umfasst die erfindungsgemäße Vorrichtung eine erste Führungsbahn 22, die in einem fahrzeugfesten Rahmen 46 vorgesehen ist. In der ersten Führungsbahn 22 ist ein erster Gleiter 12 durch einen Antrieb 20 hin und her bewegbar. Der erste Gleiter 12 ist über einen Schieber 38 mit einem Verriegelungshaken 14 verbunden, der mit einem Verriegelungsstift 16 zusammenwirkt, der an der Verdeckkastenabdeckung 10 angeordnet ist. Der erste Gleiter 12 weist eine zweite Führungsbahn 26 auf, in der ein zweiter Gleiter 18 im Wesentlichen parallel zum ersten Gleiter 12 hin und her bewegt werden kann, wobei die Relativbewegung zwischen dem ersten Gleiter 12 und dem zweiten Gleiter 18 zeitgesteuert und zumindest streckenweise nicht synchron erfolgt. Die erste Führungsbahn 22 weist eine erste Ausnehmung 24 auf, in die sich der zweite Gleiter 18 abschnittsweise hineinerstrecken kann. Die zweite Führungsbahn 26 weist eine zweite Ausnehmung 28 auf, in die sich der zweite Gleiter 18 ebenfalls abschnittsweise hineinerstrecken kann. An dem zweiten Gleiter 18 ist schwenkbar ein erster Lenker 32 angelenkt, der fest mit der Verdeckkastenabdeckung 10 verbunden ist. An der Verdeckkastenabdeckung 10 ist weiterhin ein erstes Ende eines vierten Lenkers 40 schwenkbar angelenkt, dessen zweites Ende schwenkbar an dem fahrzeugfesten Rahmen 46 angelenkt ist.

Figur 6 zeigt die Verdeckkastenabdeckung-Betätigungseinrichtung in einer ersten Arbeitsstellung, in der die Verdeckkastenabdeckung 10 geschlossen und verriegelt ist. In dieser Arbeitsstellung befindet sich der durch den Antrieb 20 hin und her bewegbare erste Gleiter 12 in seiner bezogen auf Figur 6 linken Endstellung. Der zweite Gleiter 18 erstreckt sich abschnittsweise in die erste Ausnehmung 24, die in der ersten Führungsbahn 22 vorgesehen ist. In der in Figur 6 dargestellten Arbeitsstellung wirken der Verriegelungshaken 14 und der an der Verdeckkastenabdeckung 10 angeordnete Verriegelungsstift 16 derart zusammen, dass die Verdeckkastenabdeckung 10 verriegelt ist.

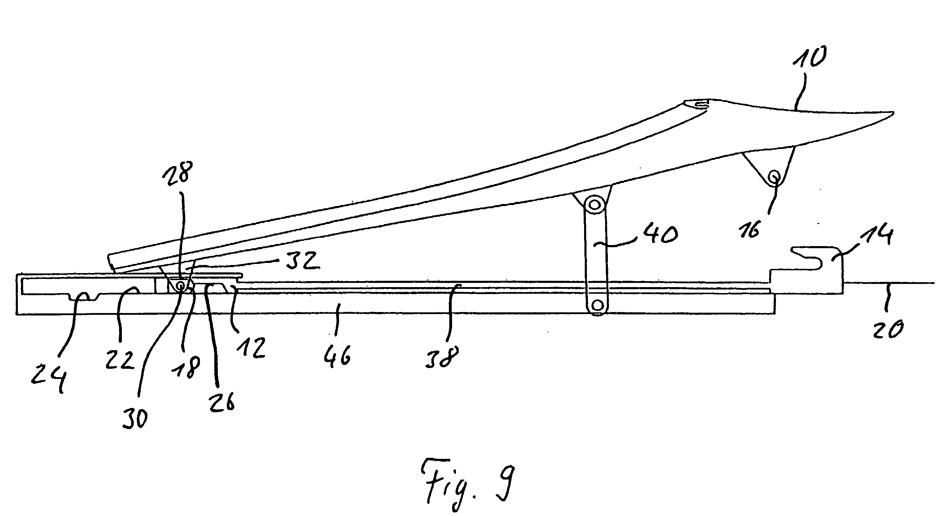

Figur 7 zeigt die Verdeckkastenabdeckung-Betätigungseinrichtung in einer zweiten Arbeitsstellung, in der der Entriegelungsvorgang abgeschlossen ist, wobei sich die Verdeckkastenabdeckung 10 im Vergleich zur Darstellung von Figur 6 noch nicht bewegt hat. Eine geringfügige Bewegung der Verdeckkastenabdeckung 10 durch eine nicht dargestellte Dichtung kann jedoch beim Übergang in die zweite Arbeitsstellung möglich sein. Um die in Figur 7 dargestellte zweite beitsstellung zu erreichen, wurde der erste Gleiter 12, und mit ihm der Verriegelungshaken 14, durch den Antrieb 20 nach rechts bewegt. Dadurch wurde der Verriegelungsstift 16 von dem Verriegelungshaken 14 freigegeben. Der zweite Gleiter 18 wurde bezogen auf die Darstellung von Figur 6 noch nicht bewegt und erstreckt sich weiterhin in die erste Ausnehmung 24 in der ersten Führungsbahn 22.

Figur 8 zeigt die Verdeckkastenabdeckung-Betätigungseinrichtung in einer dritten Arbeitsstellung, in der der Öffnungsvorgang begonnen hat. Der erste Gleiter 12 wurde, bezogen auf die Darstellung von Figur 7, durch den Antrieb 20 weiter nach rechts bewegt. Dabei hat der erste Gleiter 12 den zweiten Gleiter 18 mitgenommen, der sich nun in die zweite Ausnehmung 28 erstreckt. Der Wechsel von der ersten Ausnehmung 24 in die zweite Ausnehmung 28 wird auch in diesem Fall durch die keilförmige Form des zweiten Gleiters 18 unterstützt. Beim Verlassen der ersten Ausnehmung 24 hat sich der zweite Gleiter 18 bezogen auf die Darstellung von Figur 8 etwas nach oben bewegt, wodurch der linke Endabschnitt der Verdeckkastenabdeckung 10 etwas angehoben wurde. Dieses Anheben des linken Endabschnitts der Verdeckkastenabdeckung 10 ermöglicht, dass die gesamte Verdeckkastenabdeckung 10 zum Öffnen um die Achse 30 geschwenkt wird, die sich senkrecht zur Hauptbewegungsrichtung der Gleiter 12, 18 durch den zweiten Gleiter 18 erstreckt. Diese Hubbewegung kann gegebenenfalls auch das Abheben der Verdeckkastenabdeckung 10 von nicht dargestellten Dichtungseinrichtungen ermöglichen. Die eigentliche Schwenkbewegung der Verdeckkastenabdeckung 10 wird durch den vierten Lenker 40 in der dargestellten Weise erzwungen.

Figur 9 zeigt die Verdeckkastenabdeckung-Betätigungseinrichtung in einer vierten Arbeitsstellung, in der die Verdeckkastenabdeckung 10 vollständig geöffnet ist. Im Vergleich zur Darstellung von Figur 8 wurde der erste Gleiter 12 durch den Antrieb 20 weiter nach rechts bewegt, wobei der erste Gleiter 12 den zweiten Gleiter 18 soweit mitgenommen hat, dass sich die dargestellte Stellung des vierten Hebels 40 beziehungsweise der Verdeckkastenabdeckung 10 ergibt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: FahrzeugklappeNerdeckkastenabdeckung
- 12: erster Gleiter
- 14: Verriegelungshaken
- 16: Verriegelungsstift
- 18: zweiter Gleiter
- 20: Antrieb
- 22: erste Führungsbahn
- 24: erste Ausnehmung
- 26: zweite Führungsbahn
- 28: zweite Ausnehmung
- 30: erste Achse
- 32: erster Lenker
- 34: zweiter Lenker
- 36: dritter Lenker
- 38: Schieber
- 40: vierter Lenker
- 42: Anschlag
- 44: Führungsbolzen
- 46: Rahmen

## Patentansprüche

1. Vorrichtung zum Entriegeln/Verriegeln und Öffnen/Schließen einer Fahrzeugklappe (10), insbesondere einer Verdeckkastenabdeckung (10),
**dadurch gekennzeichnet,**
**dass** sie einen hin und her beweglichen ersten Gleiter (12), der zum EntriegelnNerriegeln der Fahrzeugklappe (10) einen Verriegelungsmechanismus (14, 16) betätigt, und einen in dem ersten Gleiter (12) hin und her beweglichen zweiten Gleiter (18) aufweist, der zum Öffnen/Schließen der Fahrzeugklappe (10) direkt oder indirekt an der Fahrzeugklappe (10) angelenkt ist.

2. Vorrichtung nach Anspruch 1,
**dadurch gekennzeichnet, dass** der erste Gleiter (12) mit einem Antrieb (20) in Verbindung steht.

3. Vorrichtung nach Anspruch 2,
**dadurch gekennzeichnet, dass** der Antrieb (20) ein elektrischer und/oder hydraulischer Antrieb ist.

4. Vorrichtung nach einem der vorhergehenden Ansprüche,
**dadurch gekennzeichnet, dass** der Verriegelungsmechanismus (14, 16) einen Verriegelungshaken (14) und einen mit diesem zusammenwirkenden Verriegelungsstift (16) umfasst.

5. Vorrichtung nach Anspruch 4,
**dadurch gekennzeichnet, dass** der Verriegelungsstift (16) an der Fahrzeugklappe (10) angeordnet ist, und dass der Verriegelungshaken (14) direkt oder indirekt mit dem ersten Gleiter (12) in Verbindung steht.

6. Vorrichtung nach einem der vorhergehenden Ansprüche,
**dadurch gekennzeichnet, dass** der erste Gleiter (12) in einer ersten Führungsbahn (22) hin und her beweglich ist, die eine erste Ausnehmung (24) aufweist, in die sich der zweite Gleiter (18) zumindest abschnittsweise hineinerstrecken kann.

7. Vorrichtung nach Anspruch 6,
**dadurch gekennzeichnet, dass** der zweite Gleiter (18) in einer zweiten Führungsbahn (26) hin und her beweglich ist, die eine zweite Ausnehmung (28) aufweist, in die sich der zweite Gleiter (18) zumindest abschnittsweise hineinerstrecken kann.

8. Vorrichtung nach einem der vorhergehenden Ansprüche,
**dadurch gekennzeichnet, dass** der erste Gleiter (12) in eine erste Arbeitsstellung, in der der Verriegelungsmechanismus (14, 16) die geschlossene Fahrzeugklappe (10) verriegelt, und in eine zweite Arbeitsstellung bringbar ist, in der die Fahrzeugklappe (10) geöffnet ist.

9. Vorrichtung nach Anspruch 8,
**dadurch gekennzeichnet, dass** der erste Gleiter (12) auf seinem Weg von der ersten Arbeitsstellung in die zweite Arbeitsstellung den zweiten Gleiter (18) zumindest streckenweise mitnimmt.

10. Vorrichtung nach Anspruch 9,
**dadurch gekennzeichnet, dass** der erste Gleiter (12) auf seinem Weg von der ersten Arbeitsstellung in die zweite Arbeitsstellung eine erste Strecke zurücklegt, während sich der zweite Gleiter (18) zumindest abschnittsweise in die erste Ausnehmung (24) erstreckt.

11. Vorrichtung nach Anspruch 9 oder 10,
**dadurch gekennzeichnet, dass** der erste Gleiter (12) auf seinem Weg von der ersten Arbeitsstellung in die zweite Arbeitsstellung eine zweite Strecke zurücklegt, während sich der zweite Gleiter (18) zumindest abschnittsweise in die zweite Ausnehmung (28) erstreckt.

12. Vorrichtung nach Anspruch 11,
**dadurch gekennzeichnet, dass** der erste Gleiter (12) den zweiten Gleiter (18) mitnimmt, wenn sich der zweite Gleiter (18) zumindest abschnittsweise in die zweite Ausnehmung (28) erstreckt.

13. Vorrichtung nach einem der vorhergehenden Ansprüche,
**dadurch gekennzeichnet, dass** der zweite Gleiter (18) eine senkrecht zu seiner Bewegungsrichtung verlaufende erste Achse (30) aufweist, um die ein erster Lenker (32) schwenkbar ist, der direkt oder indirekt an der Fahrzeugklappe (10) angelenkt ist.

14. Vorrichtung nach einem der Ansprüche 6 bis 13,
**dadurch gekennzeichnet, dass** die Fahrzeugklappe (10) zumindest geringfügig angehoben wird, wenn der zweite Gleiter (18) die erste Ausnehmung (24) verlässt.

15. Vorrichtung nach einem der Ansprüche 6 bis 14,
**dadurch gekennzeichnet, dass** die erste Ausnehmung (24) bezogen auf die Abmessungen des zweiten Gleiters (18) ein Spiel aufweist, das nach einer zumindest teilweisen Entriegelung der Fahrzeugklappe (10) zumindest einen Dichtungshub der Fahrzeugklappe (10) ermöglicht.

16. Vorrichtung nach einem der vorhergehenden Ansprüche,
**dadurch gekennzeichnet, dass** das Öffnen/Schließen der Fahrzeugklappe (10) im Wesentlichen durch eine Schwenkbewegung erfolgt.

## Claims

1. A device for locking/unlocking and opening/closing a vehicle hatch (10), particularly a roof-box cover (10),
**characterized in that** said device comprises a reciprocably movable first slider (12), which for locking/unlocking of said vehicle hatch (10) actuates a locking mechanism (14, 16), and **in that** said device comprises a second slider (18), which is reciprocably movable within said first slider (12) and which is directly or indirectly linked to said vehicle hatch (10) for opening/closing said vehicle hatch (10).

2. The device according to claim 1,
**characterized in that** said first slider (12) is coupled with a drive (20).

3. The device according to claim 2,
**characterized in that** said drive (20) is an electric and/or hydraulic drive.

4. The device according to one of the preceding claims,
**characterized in that** said locking mechanism (14, 16) comprises a locking hook (14) and an interacting locking pin (16).

5. The device according to claim 4,
**characterized in that** said locking pin (16) is arranged at said vehicle hatch (10), and **in that** said locking hook (14) is directly or indirectly coupled to said first slider (12).

6. The device according to one of the preceding claims,
**characterized in that** said first slider (12) is reciprocably movable within a first guideway (22) comprising a first recess (24) in which said second slider (18) may extend at least partially.

7. The device according to claim 6,
**characterized in that** said second slider (18) is reciprocably movable in a second guideway (26) comprising a second recess (28) in which said second slider (18) may extend at least partially.

8. The device according to one of the preceding claims,
**characterized in that** said first slider (12) can be brought into a first working position in which said locking mechanism (14, 16) locks the closed vehicle hatch (10), and into a second working position, in which said vehicle hatch (10) is opened.

9. The device according to claim 8,
**characterized in that** said first slider (12) takes along on its way from said first working position to said second working position said second slider (18) at least partially.

10. The device according to claim 9,
**characterized in that** said first slider (12) covers a first distance on its way from said first work position to said second work position, whereas said second slider (18) extends at least partially into said first recess (24).

11. The device according to one of the claims 9 to 10,
**characterized in that** said first slider (12) covers a second distance on its way from said first working position to said second working position, while said second slider (18) extends at least partially into said second recess (28).

12. The device according to claim 11,
**characterized in that** said first slider (12) takes along said second slider (18), when said second slider (18) extends at least partially into said second recess (28).

13. The device according to one of the preceding claims,
**characterized in that** said second slider (18) comprises a first axis (30), extending perpendicular to its moving direction, around which a first lever (32) can be rotated that is linked directly or indirectly to said vehicle hatch (10).

14. The device according to one of the claims 6 to 13,
**characterized in that** said vehicle hatch (10) is at least lifted slightly, when the second slider (18) leaves the first recess (24).

15. A device according to one of the claims 6 to 14,
**characterized in that** said first recess (24) comprises, relative to the measurements of said second slider (18), a clearance enabling at least a sealing lift of said vehicle hatch (10) after an at least partial unlock of said vehicle hatch (10).

16. The device according to one of the preceding claims,
**characterized in that** said opening/closing of said vehicle hatch (10) is done essentially by a pivoting movement.

## Revendications

1. Dispositif pour verrouiller/déverrouiller et pour ouvrir/fermer une trappe (10) de véhicule, notamment un couvercle (10) de logement de capote,
**caractérisé en ce qu'**il présente un premier coulisseau (12) mobile en va-et-vient qui, afin de verrouiller/déverrouiller la trappe (10) de véhicule, actionne un mécanisme de verrouillage (14, 16), et un deuxième coulisseau (18), qui est mobile en va-et-vient dans le premier coulisseau (12) et qui, afin d'ouvrir/fermer la trappe (10) de véhicule, est articulé directement ou indirectement à la trappe (10) de véhicule.

2. Dispositif selon la revendication 1, **caractérisé en ce que** le premier coulisseau (12) est relié à un entraînement (20).

3. Dispositif selon la revendication 2, **caractérisé en ce que** l'entraînement (20) est un entraînement électrique et/ou hydraulique.

4. Dispositif selon l'une des revendications précédentes, **caractérisé en ce que** le mécanisme de verrouillage (14, 16) comprend un crochet de verrouillage (14) et une broche de verrouillage (16) coopérant avec ce crochet.

5. Dispositif selon la revendication 4, **caractérisé en ce que** la broche de verrouillage (16) est disposée sur la trappe (10) de véhicule, et **en ce que** le crochet de verrouillage (14) est relié directement ou indirectement au premier coulisseau (12).

6. Dispositif selon l'une des revendications précédentes, **caractérisé en ce que** le premier coulisseau (12) est mobile en va-et-vient dans une première glissière (22), qui présente un premier évidement (24) à l'intérieur duquel le deuxième coulisseau (18) peut s'étendre au moins pour partie.

7. Dispositif selon la revendication 6, **caractérisé en ce que** le deuxième coulisseau (18) est mobile en va-et-vient dans une deuxième glissière (26), qui présente un deuxième évidement (28) à l'intérieur duquel le deuxième coulisseau (18) peut s'étendre au moins pour partie.

8. Dispositif selon l'une des revendications précédentes, **caractérisé en ce que** le premier coulisseau (12) peut être amené dans une première position de travail, dans laquelle le mécanisme de verrouillage (14, 16) verrouille la trappe (10) de véhicule fermée, et dans une deuxième position de travail, dans laquelle la trappe (10) de véhicule est ouverte.

9. Dispositif selon la revendication 8, **caractérisé en ce que** le premier coulisseau (12), sur son parcours de la première position de travail à la deuxième position de travail, entraîne avec lui au moins sur un tronçon le deuxième coulisseau (18).

10. Dispositif selon la revendication 9, **caractérisé en ce que** le premier coulisseau (12), sur son parcours de la première position de travail à la deuxième position de travail, accomplit un premier tronçon tandis que le deuxième coulisseau (18) s'étend au moins pour partie dans le premier évidement (24).

11. Dispositif selon la revendication 9 ou 10, **caractérisé en ce que** le premier coulisseau (12), sur son parcours de la première position de travail dans la deuxième position de travail, accomplit un deuxième tronçon tandis que le deuxième coulisseau (18) s'étend au moins pour partie dans le deuxième évidement (28).

12. Dispositif selon la revendication 11, **caractérisé en ce que** le premier coulisseau (12) entraîne avec lui le deuxième coulisseau (18) lorsque le deuxième coulisseau (18) s'étend au moins pour partie dans le deuxième évidement (28).

13. Dispositif selon l'une des revendications précédentes, **caractérisé en ce que** le deuxième coulisseau (18) présente un premier axe (30), s'étendant perpendiculairement à sa direction de déplacement et autour duquel peut pivoter un premier bras articulé (32) qui est articulé directement ou indirectement à la trappe (10) de véhicule.

14. Dispositif selon l'une des revendications 6 à 13, **caractérisé en ce que** la trappe (10) de véhicule est au moins légèrement soulevée lorsque le deuxième coulisseau (18) quitte le premier évidement (24).

15. Dispositif selon l'une des revendications 6 à 14, **caractérisé en ce que** le premier évidement (24) présente, par rapport aux dimensions du deuxième coulisseau (18), un jeu qui permet, après un déverrouillage au moins partiel de la trappe (10) de véhicule, au moins une course d'étanchéité de la trappe (10) de véhicule.

16. Dispositif selon l'une des revendications précédentes, **caractérisé en ce que** l'ouverture/fermeture de la trappe (10) de véhicule s'effectue essentiellement par un mouvement de pivotement.
